# EUROPEAN PATENT APPLICATION

(11) **EP 1 878 343 A1**
(43) Date of publication of application: **16.01.2008**
(21) Application number: 06117181.5
(22) Date of filing: 13.07.2006
(51) Int. Cl.: A01M 1/14

(54) **A solar powered insect trapping and terminating apparatus**

(71) Applicant: Albert & Son Co., Ltd., Sinjhuang City, Taipei County 242 (CN)
(72) Inventor: LIN, Chin-Kuo, 242, Taipei County (TW)
(74) Representative: Viering, Jentschura & Partner

(57) **Abstract**

A solar powered insect trapping & terminating apparatus mainly comprises an upper tube body (1) having an upper end pivotally coupled to a guiding board (11), said guiding board connecting to a frame (12), and a solar module (121) being disposed inside said frame; also a guiding trench (111) being implemented on said guiding board, with a bolt (13) implemented with a nut going through said guiding trench and being fixed to said upper end of said upper tube body; a shaft (14) being suitably locked to a side of said upper tube body, with a lamp (141) connecting to a front end of said shaft, and a first circuit board (1411) disposed inside said lamp, said first circuit board having a bottom connected to a plurality of luminous elements (1412) having different wavelengths; furthermore, a lower tube body (2) being disposed on the ground for said upper tube body to insert into said lower tube body, said lower tube body having a side suitably implemented with an adjusting bolt (21) to fix said upper tube body within said lower lube body; a case (3) being disposed besides said lower tube body, a power supply (31) being disposed within said case and coupled with a second circuit board (32), and said second circuit being coupled with said first circuit board inside said lamp, then a control switch (33) coupling with said second circuit board and being disposed at an outer surface of said case, thereby implementing said solar powered insect trapping & terminating apparatus; when a user tries to trap and terminate insects, he/she only needs to prepare a basin (4) or to dig a sink on the ground, therefore, when said plurality of luminous elements of said lamp emitting light of different wavelengths, various kinds of insects would be attracted to fly to said basin or said sink then as an insect falls into said basin or said sink, it would be trapped inside and could not escape.

## Description

### BACKGROUND OF THE INVENTION

### 1. Field of the invention

The present invention is related to a solar powered insect trapping & terminating apparatus, and more particularly, to a light source using a plurality of luminous elements to emit light of different wavelengths to attract insect based on the fact that insects are apt to be attracted to various light sources. Therefore, the light emitted by the plurality of luminous elements would attract insects to fly to the basin or sink disposed in advance, when an insect falls into the basin or sink, it would be trapped inside and could not escape.

### 2. DESCRIPTION OF THE PRIOR ART

Insects live among us, and some of them are harmful to humans. Among all, mosquito is commonly seen in the households. Mosquitoes are irritating because they would sting people. Besides, pest problems are troublesome to farmers who grows grain, flowers and fruits since pests would damage their crops. Therefore, farmers are also constantly seeking ways to terminate pests to protect their properties.

Basically, people often use so-called mosquito-killer lamps to catch mosquitoes. A mosquito-killer lamp exploits the characteristics that insects tend to fly towards light sources and are sensitive to specific wavelength, so when it is lightened up, mosquitoes would fly near and instantaneously get burned by the high voltage provided by the mesh of the mosquito-killer lamp; the same applies to the electric mosquito swatter. However, the mosquito-killer lamp is dangerous to seniors and children alike, because the elder could get cataract if he/she stares at the lamp too long, and the child could be electric shocked if he/she touches the mosquito-killer lamp out of curiosity. It is also expensive to turn on the mosquito-killer lamp for it would consume a lot of electric power. Furthermore, even though the electric mosquito swatter runs on batteries to save energy, a careless user would accidentally touch the net and get electric shocked.

Therefore, the above-mentioned traditional insect trapping & terminating apparatus presents several shortcomings to be overcome.

In view of the above-described deficiencies of traditional insect trapping & terminating apparatus, after years of constant effort in research, the inventor of this invention has consequently developed and proposed a solar powered insect trapping & terminating apparatus in the present invention.

### SUMMARY OF THE INVENTION

It is an object of the present invention to provide a solar powered insect trapping & terminating apparatus which attracts insects based on the fact that insects would be attracted to different light sources and uses a plurality of luminous elements having different wavelengths to emit light of different wavelengths, therefore, various kinds of insects would see the light and fly to the basin or the sink. When an insect falls into the basin or the sink, it would be trapped inside and could not escape.

It is another object of the present invention to provide a power supply which stores electric power transformed by a solar module to act as a power source, therefore, the solar powered insect trapping & terminating apparatus is self-contained without requiring external power source.

It is still another object of the present invention to provide a solar powered insect trapping & terminating apparatus which comprises a solar module that can swing according to the position where the sunlight shines upon.

It is still another object of the present invention to provide a solar powered insect trapping & terminating apparatus which is low cost, easy to operate and simple in its structure.

The present invention discloses a solar powered insect trapping & terminating apparatus, comprising an upper tube body, a guiding board, a frame, a shaft, a lower tube body and a case; wherein the upper tube body having its upper end pivotally coupled to a semicircular guiding board, the guiding board connecting to a frame, and a solar module being disposed inside the frame; also a semicircular guiding trench being implemented on the guiding board, with a bolt implemented with a nut going through the guiding trench and being fixed to the upper end of the upper tube body for the frame to be guided by the guiding trench to move on a curve; a shaft being suitably locked to a side of the upper tube body, with a lamp connecting to a front end of the shaft, and a first circuit board being disposed inside said lamp, the first circuit board having a bottom connected to a plurality of luminous elements having different wavelengths; furthermore, a lower tube body being disposed on the ground for the upper tube body to insert into the lower tube body, the lower tube body having a side suitably implemented with an adjusting bolt, which can adjust a position where the upper tube body is fixed to the lower tube body, when the upper tube body has been moved to the position, the adjusting bolt is used to fix the upper tube body within the lower tube body; and a case being disposed besides the lower tube body, a power supply being disposed within the case and coupled with a second circuit board, and the second circuit being coupled with the first circuit board inside the lamp, then a control switch being coupled with the second circuit board and disposed at an outer surface of the case, thereby implementing the solar powered insect trapping & terminating apparatus; when a user tries to trap and terminate insects, he/she only needs to prepare a basin or to dig a sink on the ground, therefore, when the plurality of luminous elements of the lamp emitting light of different wavelengths, various kinds of insects would be attracted to fly to the basin or the sink, then as an insect falls into the basin or the sink, it would be trapped inside and could not escape.

These features and advantages of the present invention will be fully understood and appreciated from the following detailed description of the accompanying Drawings.

### BRIEF DESCRIPTION OF THE DRAWINGS

Fig.1 illustrates a side view of a solar powered insect trapping & terminating apparatus in the present invention;
Fig.2A and Fig.2B illustrate how the frame of the solar powered insect trapping & terminating apparatus swings; and
Fig.3 illustrates an embodiment of the solar powered insect trapping & terminating apparatus in the present invention.

### DETAILED DESCRIPTION OF THE PREFERRED EMBODIMENT

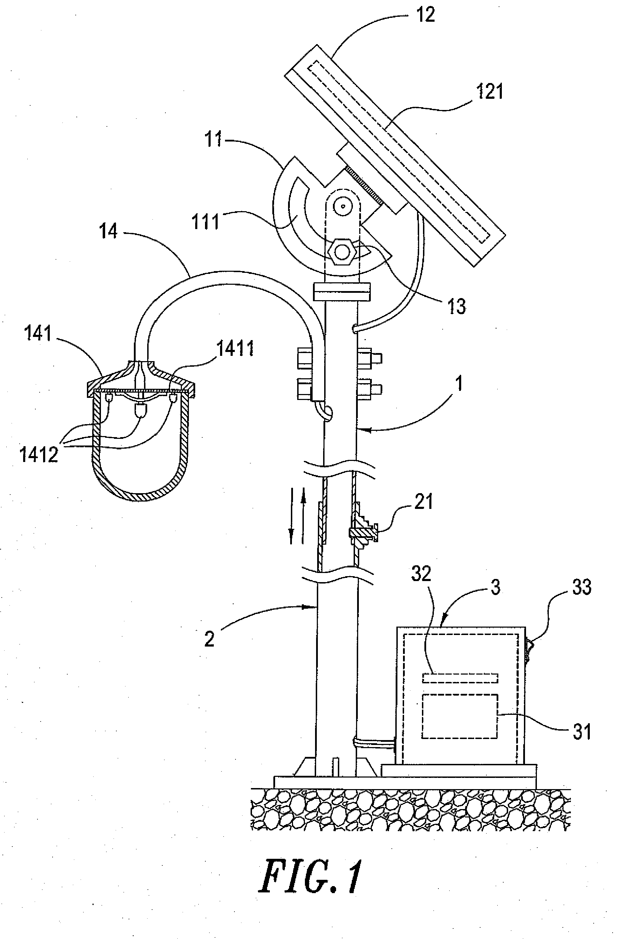

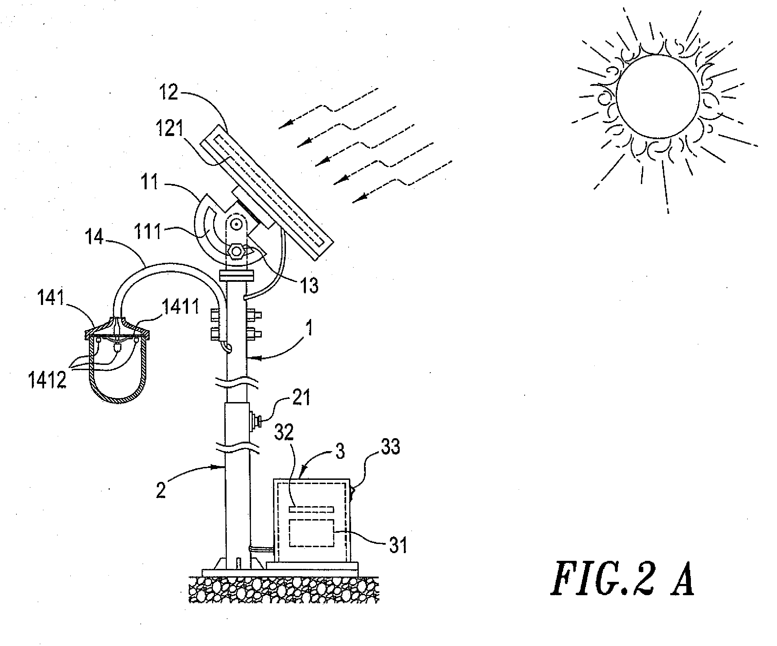

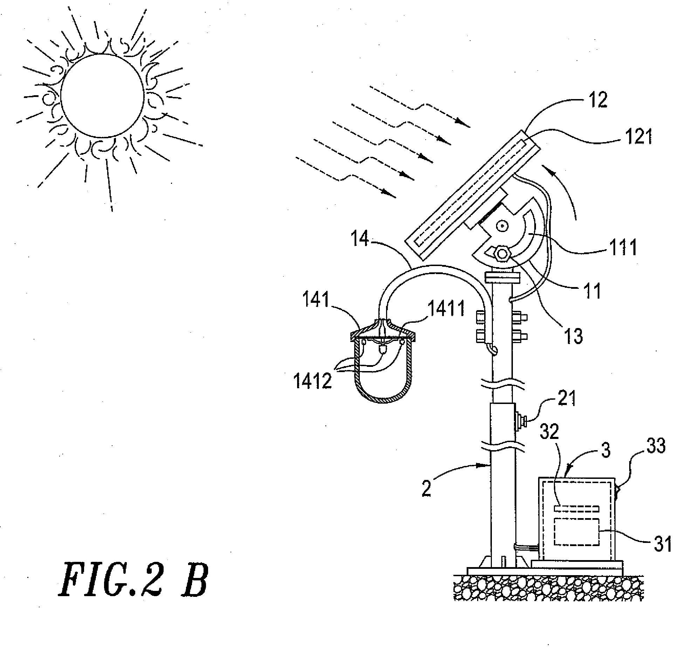

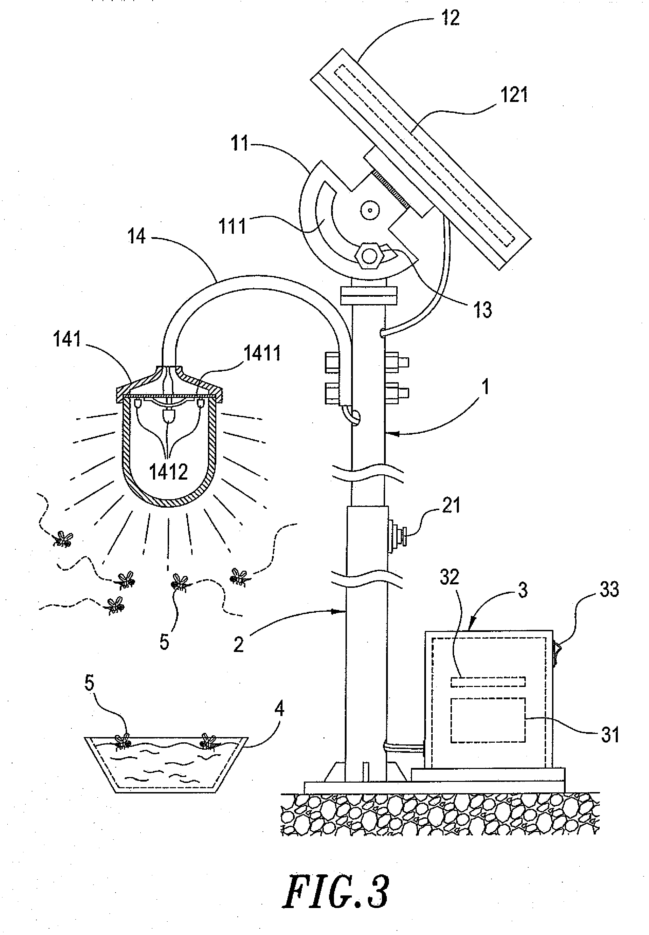

Please refer to Fig.1 through Fig.3 for a solar powered insect trapping & terminating apparatus disclosed in the present invention, which comprise:
a upper tube body 1, upper tube body 1 having its upper end pivotally coupled to a semicircular guiding board 11, the guiding board 11 connecting to a frame 12, and a solar module 121 being disposed inside frame 12; also a semicircular guiding trench 111 being implemented on guiding board 11, with a bolt 13 implemented with a nut going through guiding trench 111 and being fixed to the upper end of upper tube body 1 for frame 12 to be guided by guiding trench 111 to move on a curve (as shown in Fig.2A and Fig.2B); a shaft 14 being suitably locked to a side of upper tube body 1, with a lamp 141 connecting to a front end of shaft 14, and a first circuit board 1411 being disposed inside lamp 141, first circuit board 1411 having a bottom connected to a plurality of luminous elements 1412 having different wavelengths; solar module 121 being provided for receiving sunlight and transforming it into electric power;
a lower tube body 2, lower tube body 2 being disposed on the ground for upper tube body 1 to insert into lower tube body 2, lower tube body 2 having a side suitably implemented with an adjusting bolt 21, which can adjust a position where upper tube body 1 is fixed to lower tube body 2, when upper tube body 1 has been moved to the position, the adjusting bolt 21 is used to fix upper tube body 1 within lower tube body 2; and
a case 3, case 3 having a power supply 31 being disposed therein, power supply 31 being coupled with a second circuit board 32, and second circuit 32 being coupled with first circuit board 1411 inside lamp 141, then a control switch 33 being coupled with second circuit board 32 and disposed at an outer surface of case 3, power supply 31 storing electric power transformed by solar module 121 to act as a power source; wherein power supply 31 is a battery or other devices capable of storing electric power; control switch 32 controlling the operations of the plurality of luminous elements 1412 inside lamp 141.

The solar powered insect trapping & terminating apparatus of the present invention is implemented by components disclosed above. When a user tries to trap and terminate insects, he/she only needs to prepare a basin or to dig a sink on the ground, therefore, when the plurality of luminous elements 1412 of lamp 141 emitting light of different wavelengths, various kinds of insects 5 would be attracted to fly to lamp 141 and fall into the basin or the sink, they would be trapped inside and could not escape, thereby carrying out the trapping & terminating functions.

The present invention provides a solar powered insect trapping & terminating apparatus, which compares with other traditional powered insect trapping & terminating devices, is advantageous in:
1. The present invention provides a solar powered insect trapping & terminating apparatus which attracts insects based on the fact that insects would be attracted to different light sources and uses a plurality of luminous elements having different wavelengths to emit light of different wavelengths, therefore, various kinds of insects would see the light and fly to the basin or the sink. When an insect falls into the basin or the sink, it would be trapped inside and could not escape.
2. The present invention provides a power supply which stores electric power transformed by a solar module to act as a power source, therefore, the solar powered insect trapping & terminating apparatus is self-contained without requiring external power source.
3. The present invention provides a solar powered insect trapping & terminating apparatus which comprises a solar module that can swing according to the position where the sunlight shines upon.
4. The present invention provides a solar powered insect trapping & terminating apparatus which is low cost, easy to operate and simple in its structure, making it easy to promote this product.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A solar powered insect trapping & terminating apparatus, comprises:
an upper tube body 1 having an upper end pivotally coupled to a guiding board 11, said guiding board 11 connecting to a frame 12, and a solar module 121 being disposed inside said frame 12; also a guiding trench 111 being implemented on said guiding board 11, with a bolt 13 implemented with a nut going through said guiding trench 111 and being fixed to said upper end of said upper tube body 1; a shaft 14 being suitably locked to a side of said upper tube body 1, with a lamp 141
connecting to a front end of said shaft 14, and a first circuit board 1411 being disposed inside said lamp 141, said first circuit board 1411 having a bottom connected to a plurality of luminous elements 1412 having different wavelengths;
a lower tube body 2 being disposed on the ground for said upper tube body 1 to insert into said lower tube body 2, said lower tube body 2 having a side suitably implemented with an adjusting bolt 21 to fix said upper tube body 1 within said lower tube body 2; and
a case 3 having a power supply 31 being disposed within said case 3 and coupled with a second circuit board 32, and said second circuit board 32 being coupled with said first circuit board 1411 inside said lamp 141, then a control switch 33 being coupled with said second circuit board 32 and disposed at an outer surface of said case 3.

2. The solar powered insect trapping & terminating apparatus of claim 1, wherein said frame 12 being guided by said guiding trench 111 of said guiding board 11 to move on a curve.

3. The solar powered insect trapping & terminating apparatus of claim 1, wherein said solar module 121 is provided for receiving sunlight and transforming it into electric power.

4. The solar powered insect trapping & terminating apparatus of claim 1, wherein said adjusting bolt 21 can adjust a position where said upper tube body 1 is fixed to said lower tube body 2, when said upper tube body 1 has been moved to said position, said adjusting bolt 21 is used to fix said upper tube body 1 to said lower tube body 2.

5. The solar powered insect trapping & terminating apparatus of claim 1, wherein said power supply 31 stores electric power transformed by said solar module 121 to act as a power source.

6. The solar powered insect trapping & terminating apparatus of claim 1, wherein said power supply 31 is a battery or other devices capable of storing electric power.

7. The solar powered insect trapping & terminating apparatus of claim 1, wherein said control switch 33 controls an operation of said plurality of luminous element 1412s inside said lamp 141.

8. The solar powered insect trapping & terminating apparatus of claim 1, wherein a basin 4 or a sink can be disposed under said case 3 in advance to cause an insect 5 to fall into said basin 4 or said sink.
